Europäisches Patentamt

(19) **European Patent Office**

**Office européen des brevets**

(11) Publication number: **0 034 335**
**A1**

(12) # EUROPEAN PATENT APPLICATION

(21) Application number: **81100980.2**

(22) Date of filing: **12.02.81**

(51) Int. Cl.³: **B 65 G 25/08**

(30) Priority: **14.02.80 GB 8005015**

(43) Date of publication of application:
**26.08.81 Bulletin 81/34**

(84) Designated Contracting States:
**DE FR IT**

(71) Applicant: **TORVALE ENGINEERING LIMITED**
**Torvale Industrial Estate Pembridge Leominster**
**Herefordshire HR6 9LA(GB)**

(72) Inventor: **Davies, John Alan**
**8 Rockes Meadow**
**Knighton Powys Wales(GB)**

(74) Representative: **Symes, Robert George et al,**
**FORRESTER & BOEHMERT Widenmayer Strasse 5/IV**
**D-8000 München 22(DE)**

(54) A new or improved shuttle conveyor.

(57) A shuttle conveyor of the type in which products are supported by rollers or skids and are moved stepwise by reciprocating drive means is adapted so that the products can be fed discontinuously along the conveyor with gaps between some of the products and so that products can be allowed to accumulate at the end of the conveyor without danger of collison. Each product (14,15,16) is moved by an individual dog mechanism (25) which is moved by actuator means selectively between a projecting and a withdrawn condition in response to control means such as proximity sensors (32) at the next adjacent station on the conveyor or programmable over all control means. Uses for the conveyor include moving heavy products or large relatively easily damaged products such as consumer electrical goods.

./...

Croydon Printing Company Ltd.

FIG. 2

Title: "A new or improved Shuttle Conveyor"

Description of Invention

This invention relates to shuttle conveyors.

Industrial conveyors are most frequently of a type in which products are moved on a belt or on rollers which is or are continuously driven. This invention, however, is concerned with another type of conveyor, referred to as a "shuttle conveyor" in which products are moved stepwise along the conveyor.

For reasons which will become apparent from the particular description of this Specification, the conveyor may be especially applicable to the handling of very heavy products or to those of a relatively easily damaged nature such as consumer electrical goods for example. However, other types of product can be handled, with the proviso that each product handled is of the same length as the next.

The term "product" as used in this Specification can mean either an article to be handled on the conveyor or a vessel or container carrying one or more articles.

In a typical shuttle conveyor, the products are supported by support means such as freely rotatable rollers or skids and are moved by a reciprocating drive means.

Hitherto, such conveyors have had limited applicability because of two inter-related problems.

Firstly, it has not been possible to feed products discontinuously along the conveyor, that is with gaps between some of the products; secondly it has not been possible to accumulate products on the conveyor.

It is an object of the invention to provide a new or improved shuttle conveyor which enables these disadvantages to be overcome.

According to the invention there is provided a shuttle conveyor comprising product support means; reciprocating drive means; a plurality of product engageable dogs, each capable of being selectively movable between a projecting condition in which it can engage a product and a withdrawn condition in which it cannot engage a product, the dogs being associated with the reciprocating drive means so that, in the projecting condition, each can transfer a drive stroke to an associated product to move it along the support means from one station to a next adjacent station; sensor means at each station capable of detecting the presence or absence of a product at that station; actuator means for each dog operable to place the dog selectively in the projecting or in the withdrawn condition; and control means adapted and arranged to control the actuator means in accordance with the information detected by the sensor means.

The control means may be arranged to prevent a dog from being brought into a projecting condition at the commencement of a drive stroke from a first to a second station if the sensor means at the second station detects the presence of a product there.

Alternatively or additionally, the control means may operate each actuator means in accordance with a predetermined program in response to the information detected by all of the sensor means.

The actuator means may comprise pneumatic piston and cylinder means and the reciprocating drive means may comprise a hollow beam carrying said dogs, the interior of said beam forming an air pressure reservoir.

The actuator means may alternatively be electrically operated.

The beam may be reciprocated in guides by means of a main piston and cylinder assembly which may be hydraulic or pneumatic.

Alternatively, the drive means may comprise a rack and pinion drive or a reciprocating chain drive.

The sensor means may each comprise an electromagnetic proximity switch or may each comprise an electromechanical limit switch or a fluidic switch.

The conveyor may include a power driven section at one or both ends.

The invention will now be described in more detail by way of example only with reference to the accompanying drawings in which:-

FIGURE 1 is a plan view of part of a shuttle conveyor embodying the invention;

FIGURE 2 is a side elevational view of the shuttle conveyor of Figure 1.

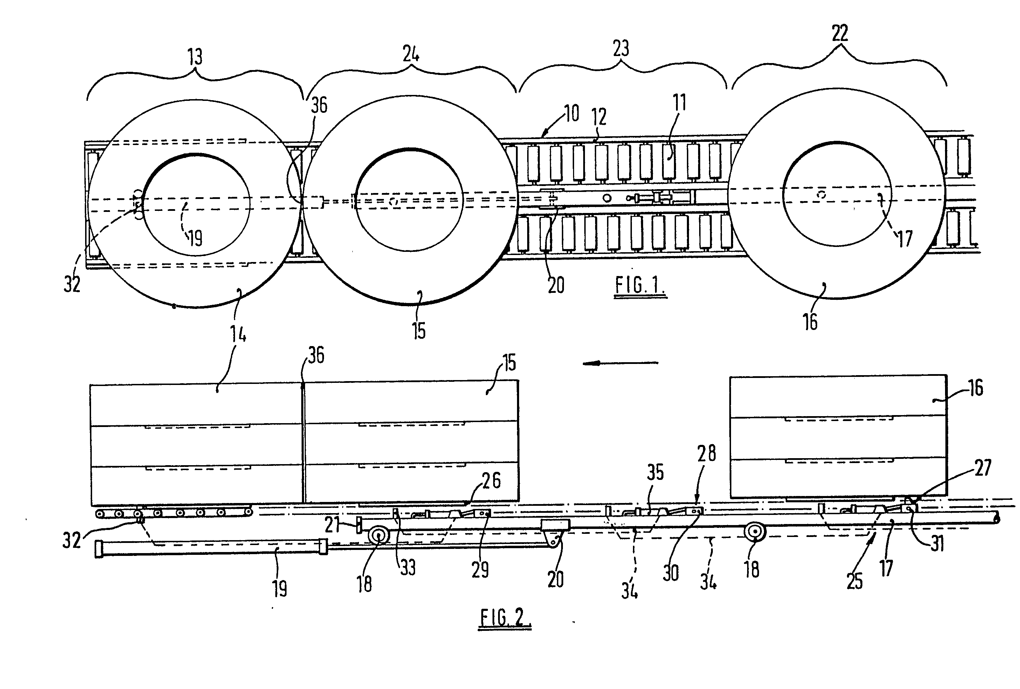

Referring to the drawings, a shuttle conveyor is generally indicated at 10 and comprises two parallel rows of freely rotatable rollers 11 mounted in a rigid frame 12. A section of the conveyor shown bracketed at 13 in Figure 1 is provided with powered rollers. In the drawings, the section 13 is a "take-off" section which can be intermittently power driven to remove a product 14 from the end of the conveyor as and when it is required for delivery to some other place.

The products 14, 15, 16 shown on the conveyor are being moved from right to left as shown.

The free rollers 11 merely support the products on the conveyor and do not, themselves, transmit any drive to the products. Drive is transmitted via a reciprocating beam 17 which is disposed centrally of the two rows of free rollers 11 and below the level of these rollers. The beam 17 is mounted in guide rollers 18 for reciprocal movement.

The beam 17 is moved by a main piston and cylinder assembly 19, the piston rod of which is attached to the beam at 20.

In a preferred embodiment illustrated in the drawings, the beam 17 is of rectangular cross-sectional shape and is hollow. The ends, one of which is shown at 21, are sealed so that the interior of the beam can form an air pressure reservoir for a purpose later to be described, and rechargeable as required.

Considering the part of the conveyor to the right hand side of the powered section 13, a plurality of stations are shown, each indicated by a bracketed region on Figure 1 of the drawings. A first station 22 is occupied by the product 16, a second station 23 is empty and a third station 24 contains the product 15.

The beam 17 provides the power to move the products along the conveyor. At each station, a dog mechanism is provided, generally indicated at 25. The products are provided with some suitable abutment 26 on their under surface which can be engaged by a dog of the mechanism 25 at each of the stations. The arrangement is such that the dogs are brought into a projecting condition generally indicated at 27 before the commencement of each drive stroke of the piston and cylinder assembly, the dog 25 then engages the abutment 26 and pushes the product from one station to the next, corresponding to the length of the drive stroke of the piston and cylinder assembly 19, and the dog is then lowered to a withdrawn condition generally indicated at 28, whereupon the beam is returned in the opposite direction by the piston and cylinder assembly 19. Each dog therefore shuttles between two adjacent stations. Where a shuttle conveyor is of a hitherto conventional type, the products are fed onto the conveyor at one end and each product is moved to a next adjacent station at each reciprocation of the drive means for example the beam.

However, this limits the usefulness of previously known shuttle conveyors in that they could only be used if the product was being continuously introduced at one end of the conveyor and continuously removed at the other end, the introduction and removal of product being synchronised with the movement of the beam.

It will be seen from the drawings that this is not the case in the conveyor illustrated. The station 23 is shown empty so that products 14 and 15 have travelled along the conveyor to the powered section 13 and station 24 respectively, without being immediately followed by another product. This enables the conveyor to be used to accumulate products at the discharge end, from which they can subsequently be removed by operating the powered section 13.

Where product is accumulating at the discharge end of the conveyor, it will be seen that problems would arise if the dogs at the stations adjacent the discharge end were operated in the normal way at each reciprocating stroke of the drive means. For example, with the product 14 stationary at the powered section 13 of the conveyor, awaiting take-off, it is not possible to move the product 15 from the station 24 to the section 13. The dog 29 therefore requires to be held down during the forward drive stroke of the piston and cylinder assembly 19. Conversely, the position of the dog 30 at the next adjacent station 23 does not matter because there is no product at that station which could collide with the product 15 at the station 24 during the next movement of the beam 17. It is essential that the dog 31 at the next station 22 is in the projecting condition shown at 27 in order to move the product 16 to the next station 23.

In order to operate the shuttle conveyor in this manner, a plurality of sensors are provided which may be of any suitable type and which are intended to sense the presence or absence of a product at each station immediately before the commencement of a drive stroke of the piston and cylinder assembly. The information sensed by the sensors is used to operate control means for the dog mechanism 25 at at least one of the preceding stations.

In the simplest arrangement shown in the drawings, a sensor 32 is arranged to sense the presence or absence of a product at the powered section 13 at the end of the conveyor. The information from this sensor 32 controls the operation of the dog 29 at the immediately preceding station 24. A sensor 33 at the station 24 senses the presence or absence of the product 15 and relays this information to the dog 30 at the next station 23.

In the arrangement outlined, an individual control means is provided for each of the dog mechanisms 25, linking it with the sensor at the next succeeding station. If that station is empty, the dog is moved to the projecting condition 27 at the commencement of the drive stroke and if the next succeeding station is occupied, the dog is maintained in a withdrawn condition. Using this arrangement, product can be introduced intermittently onto the conveyor and each individual product will be moved stepwise along the conveyor until it comes up against a preceding product whereupon the next drive stroke of the drive means is not transmitted to the product. Product accumulates at the discharge end of the conveyor.

By utilising a central programmable control system, it can be arranged that products will move along the conveyor either as described in the preceding paragraph or, where products are also being removed from the powered section 13 at the end of the conveyor, the next succeeding products may be moved in synchronism with the products being discharged. It will be appreciated that the conveyor can, without modification, then be capable of operation in the conventional manner in which each station is occupied by a product which is moved to the next adjacent station at each stroke of the main piston and cylinder assembly.

Returning to the relatively simple control system illustrated in the drawings, each sensor is in the form of an electromagnetic proximity switch which, when it senses the presence of a product at the station at which it is located, produces an electrical signal which passes down one of the control lines indicated at 34. These control lines lead to respective solenoid controls for actuator piston and cylinder assemblies 35 which are, in turn, powered by pressurised air admitted from the air pressure reservoir within the beam 17. Movement of the piston in the assembly 35 to one end is accompanied by raising of the dog to the projecting condition 27, whereas movement to the other end is accompanied by withdrawal of the dog to the withdrawn condition 28.

The assembly can be modified from the arrangement shown by feeding the signals from the respective sensors 32, 33 and so on, to suitable electronic control circuitry programmable to actuate the required dog mechanisms 25.

As an alternative to the use of electromagnetic proximity switches as sensors, electromechanical limit switches may be used or alternatively the system may be controlled by fluidic switches sensitive to the presence or absence of a product.

The shuttle conveyor described and illustrated above may have particular applicability to the handling of very heavy products or those of a relatively easily damaged nature such as consumer electrical goods, because each product is individually and positively moved from one station to the next. The friction in the rotatable rollers 11 can be arranged to be such that the product does not overshoot the station so that each product can be separated by a small gap from the next adjacent product throughout the operation of the conveyor. Taken in combination with the arrangements to prevent articles being fed into already occupied stations, it will be seen that this enables the products to be moved along the conveyor without any danger of collision.

A typical conveyor will have more stations than that illustrated in the drawings by way of example. If the length of the conveyor and working load exceed the working capacity of the main piston and cylinder assembly, one or more further driving piston and cylinder assemblies may be provided, spaced along the conveyor, which may all be operated synchronously by control of the hydraulic or pneumatic supply to each.

CLAIMS:

1.   A shuttle conveyor comprising product support
means; reciprocating drive means; a plurality of product
engageable dogs, each capable of being moved between a
projecting condition in which it can engage a product and
a withdrawn condition in which it cannot engage a
product, the dogs being associated with the reciprocating
drive means so that, in the projecting condition, each
can transfer a drive stroke to an associated product to
move it along the support means from one station to a
next adjacent station; the conveyor being characterised
in that sensor means are provided at each station capable
of detecting the presence or absence of a product at that
station; in that actuator means are provided for each dog
operable to place the dog selectively in the projecting
or in the withdrawn condition; and in that control means
are provided adapted and arranged to control the actuator
means in accordance with the information detected by the
sensor means.

2.   A conveyor according to Claim 1 further characterised in that the control means are arranged to prevent a
dog from being brought into a projecting condition at the
commencement of a drive stroke from a first to a second
station if the sensor means at the second station detects
the presence of a product there.

3.   A conveyor according to Claim 1 or Claim 2 further
characterised in that the control means operate each
actuator means in accordance with a predetermined program
in response to information detected by all of the sensor
means.

4.   A conveyor according to any preceding claim further
characterised in that the reciprocating drive means comprises a beam carrying said dogs and arranged for reciprocating movement in guides by means of a main piston and cylinder assembly.

5. A conveyor according to Claim 4 further characterised in that the beam is hollow and the interior thereof forms an air pressure reservoir and in that the actuator means comprise pneumatic piston and cylinder means operable by air pressure from said reservoir.

6. A conveyor according to any one of Claims 1 to 3 further characterised in that the actuator means are electrically operated.

7. A conveyor according to any one of Claims 1 to 3 or to Claim 6 further characterised in that the drive means comprise a reciprocable rack and pinion drive means.

8. A conveyor according to any one of Claims 1 to 3 or Claim 6 or 7 further characterised in that the drive means comprises a reciprocating chain drive.

9. A conveyor according to any preceding claim further characterised in that the sensor means each comprise an electromagnetic proximity switch.

10. A conveyor according to any preceding claim further characterised in that it includes a power driven section at one or both ends.

FIG. 1.

FIG. 2.

1/1

0034335

# EUROPEAN SEARCH REPORT

0034335

European Patent Office

**Application number**

EP 81100980.2

## DOCUMENTS CONSIDERED TO BE RELEVANT

| Category | Citation of document with indication, where appropriate, of relevant passages | Relevant to claim |
|---|---|---|
| | US - A - 4 202 440 (AKIRA NIKI) <br> + Fig. + <br> -- | 1-3 |
| A | US - A - 3 888 344 (HARRY MAJOR) <br> + Fig. 1-3 + <br> -- | 1 |
| A | US - A - 4 175 656 (JOHN M. LANG) <br> + Fig. 1-8 + <br> -- | 1 |
| A | GB - A - 1 258 257 (SIMON HANDLING ENGINEERS LIMITED) <br> + Fig. + <br> ---- | 1 |

**CLASSIFICATION OF THE APPLICATION (Int. Cl.³)**

B 65 G 25/08

**TECHNICAL FIELDS SEARCHED (Int. Cl.³)**

B 65 G 13/00
B 65 G 19/00
B 65 G 25/00
B 65 G 43/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search <br> VIENNA | Date of completion of the search <br> 07-05-1981 | Examiner <br> WIDHALM | |

EPO Form 1503.1   06.78